# EUROPEAN PATENT SPECIFICATION

(11) **EP 4 010 822 B1**
(45) Date of publication and mention of the grant of the patent: **27.05.2026**
(21) Application number: 20767606.5
(22) Date of filing: 10.08.2020
(51) Int. Cl.: G06Q 10/30

(54) **SELECTION SYSTEM FOR THE PARTS CONSTITUTING ELECTRICAL AND ELECTRONIC EQUIPMENT**
AUSWAHLSYSTEM FÜR DIE TEILE, DIE ELEKTRISCHE UND ELEKTRONISCHE AUSRÜSTUNG DARSTELLEN
SYSTÈME DE SÉLECTION POUR LES PIÈCES CONSTITUANT UN ÉQUIPEMENT ÉLECTRIQUE ET ÉLECTRONIQUE

(30) Priority: 08.08.2019 IT 201900014451
(43) Date of publication of application: 15.06.2022
(73) Proprietor: Futuredata Srl, 16124 Genova (IT)
(72) Inventor: CAPPONI, Rosario, 16124 Genova (IT)
(74) Representative: Bottino, Giovanni
(86) International application number: PCT/IB2020/057510
(87) International publication number: WO 2021/024235

(56) References cited:
- EP-A2- 1 052 583
- US-A1- 2009 321 511

## Description

The present invention relates to a selection system of the materials constituting electrical and electronic equipment according to the preamble of claim 1.

Advantageously, the system comprises a storage unit, a processing unit, an input unit and an output unit and an optical / visual recognition unit of printed circuit boards for both qualitative and positional analysis and recognition of the various components. This information, integrated therewith, will be used for automatic disassembly. Those printed circuit boards (PCBs) whose product code (bar code or OR-code or other identifier) is not yet present in the system database will be run / submitted to the optical recognition unit.

Nowadays, the use of electrical and electronic equipment is strongly growing and the market trend is to offer innovative equipment with increased functionalities.

The increasingly insistent demands of the market and the collapse of prices for the creation of printed circuit boards (PCBs) has led each user, in case of malfunctions, to expect to purchase new devices, disposing of the old ones, both because they are obsolete, and because the repair of non-functioning devices includes higher costs than replacement with latest generation equipment.

It is clear that this trend has a negative impact on the pollution caused by the disposal of electrical and electronic equipment.

On average, at the state of the art, there are about 50 to 60 different materials / chemical elements which constitute an electronic device, mainly concentrated in the printed circuit boards.

Of this high number less than 25% can be recovered, and of this percentage only about 10% is actually reused in the electronics industry itself.

The remainder is generally lost and not recycled during the process of disassembly and pretreatment of electronic devices which involves shredding them, including the boards contained therein, so that the materials constituting them are all mixed together and, the recovery of the materials present in small quantities is especially no longer sustainable.

This is the most common technique, which means that the amount of materials which can be recovered is very low because at the moment, a recovery system cannot disassemble and separate the components of an electronic device without knowing what, how many and where the different materials are in each component populating a printed circuit board.

This problem is disadvantageous not only from the point of view of pollution, but also from the point of view of environmental conservation in general, as it requires a continuous and growing demand for the raw materials that comprise printed circuit boards, which are often precious, critical or rare materials, whose limited sources of supply tend to run out over time.

Precisely for this reason, the inefficient recovery of materials created by the systems known in the state of the art also presents economically disadvantageous aspects, requiring the continuous extraction of precious materials, subject, moreover, to fluctuations in the markets.

This means that their supply chains are hardly or not at all resilient when a supply problem arises.

Documents EP1052583 and US2009/321511 disclose some possible solutions to the above mentioned drawbacks.

The system presented herein represents a model of industrial symbiosis between manufacturers of electrical and electronic equipment and the industries for the treatment of electronic waste and the refining of the various chemical elements for the market placement of secondary raw materials. All this to the benefit of the sustainability of the electrical and electronics industry according to the model of circular economy.

In this way, all the electrical and electronic equipment registered in this system will contain therein an additional "environmental value" constituted precisely by the fact that it is prepared so that the materials which constitute it can be recycled in greater numbers (due to the quality of the different chemical elements) and quantity (greater yield) with all the advantages which this entails. This is much appreciated by the younger and constantly growing market segments.

There is therefore an unmet need for state-of-the-art systems to solve the above-mentioned problems, in particular to create a system and a method which allow a more effective recovery of the material constituting electronic equipment and printed circuit boards, capable of generating a virtuous system of material recycling and recovery which involves the entire production chain, from the manufacturer to the user to the final recovery/treatment plant.

The present invention achieves the above purposes by creating a system as described in the preamble of independent claim 1 and according to the characterizing part of independent claim 1.

According to a possible embodiment, a third database will contain location information of each individual component on the board required for managing the automated selection and disassembly.

A fourth database will contain the construction drawings of the various devices to be processed, useful in a first processing step which involves manual disassembly guided / assisted by the information provided directly to the operator, who will thus be able to carefully select each piece based on the material with which it is formed.

Finally, the output unit is configured to acquire the unique identification code and to generate instructions for the guided recovery and selection of the materials present in the different components.

It is clear that the object of the present invention is to select the materials present within the electronic equipment, guided by the information collected and processed and managed by the system and then subsequently obtain a recovery of the materials themselves.

It is specified that within the text, explicit reference is made to printed circuit boards, which are the most difficult part to process and which contain the materials of greatest interest.

The system and the method of the present invention may in any case be used for any part of the electronic equipment.

In fact, such equipment generally undergoes a coarse first selection step of the parts, generally performed manually, to then have a finer selection of materials, the integration therebetween of these two activities fundamentally based on the data collected, processed and managed by the system, represents the main object of the present invention.

The operation of the system object of the present invention is for each manufacturer to enter/provide information about the manufactured device, including the details thereof and the printed circuit boards thereof with the relative components and the system generates a first database.

Then the system generates a second database using known information, on the quality and quantity of the materials constituting each discrete element of the device itself, and here at the state of the art, also the indications relating to the number and quantity of materials within each individual component of the printed circuit board.

The system manages a unique code, mostly defined by the manufacturer, or otherwise attributed by the system itself, as a unique element to identify the electronic device and/or the components thereof: power supply boards, motors , monitors, etc. so that the buyer or end user of the device and/or of the individual component/board can, through this code, trace the type and quantity of materials present within the printed circuit board.

In addition to ensuring the generation of instructions to allow an efficient selection and subsequent recovery of materials, one of the main advantages of the system object of the present invention is that it does not require any substantial intervention neither in the design nor in the construction of the equipment itself and the printed circuit boards.

In fact, the manufacturer participating in the project is asked to provide a data file and to affix the logo of the same project on the individual parts and on the entire device in a visible way, so as to make it known/ manifest to everyone that the platform contains the useful and necessary information for the disassembly and selection of the components based on the materials constituting it.

The system object of the present invention may be partly integrated within a software to allow to create a digital platform which will contain the data relating to which, where and in what quantity the chemical elements are present within the electrical and electronic equipment and/or within the parts thereof.

A sort of container is obtained in which the information is processed to allow the meticulous knowledge of the materials, both separately and aggregated for individual chemical elements, which are contained in all the various parts constituting an electronic device, so as to be able to use, as will be described below, this information to obtain the selection of the materials present within each individual electronic device and the subsequent recovery thereof.

This knowledge makes it possible to overcome the bottleneck still constituted by the lack of information in this field and which prevents an efficient and effective selection of the many materials used for the construction of such equipment.

This represents a significant improvement of other systems which acquire information on the materials and structure of electronic equipment to be disassembled off-line, i.e., limited to the manual operator's point of intervention, compared to a holistic view of the life cycle of the equipment itself which affects the manufacturers of primary components C1, semifinished components C2, and complete equipment C3, the manual and automatic disassembly steps, the selection and production of secondary raw materials to create new C1s from the design up to the recovery of materials

The output unit therefore generates information which is useful to the entire production chain of electronic equipment, in particular:
manufacturers, to verify compliance with the various regulations on materials (RoHS, Conflict Minerals, etc.) and to demonstrate to the market their commitment to transparency and sustainability,
certified companies, to demonstrate a constant commitment to environmental performance,
consumers, who can make more informed purchases,
recyclers and refiners, who will be able to carry out the operations of disassembly, selection and sorting of the components no longer based on coarse chemical-physical parameters, but on more precise information provided by the system itself so as to deserve the definition of "Data-drive Material Recovery System".

It is also clear that the system object of the present invention deals with generating an important amount of data relating to the electronic equipment and materials of which they are composed.

For this reason, in order to create an immutable data structure, the integrity of which is guaranteed and shared by the various actors of the system, it is possible to use the data structure known as "Blockchain".

In particular, the blockchain could be used in the exchange of data between manufacturers of electrical and electronic equipment and for the exchange of data processed by the system and machines which disassemble the printed circuit boards at the recovery plants.

As will be clear from some of the illustrated embodiments, the database may contain information about the location of components within the printed circuit board so as to obtain a spatial determination of the components.

In view of the advantageous features of the system just described, the present invention also relates to a method for selecting the materials constituting the electrical and electronic equipment according to claim 8.

A method for selecting the materials constituting the electrical and electronic equipment comprises the following steps:
1) data acquisition in a hierarchical manner, from the simplest components,
   (C1: e.g., resistors, microprocessors, LEDs, capacitors, etc.)
2) more complex components (C2) composed of the assembly of multiple C1s, but in such a way that a C2 is not able to perform the functions for which it was created, independently and disconnected from other essential functional parts such as a power supply, an input output apparatus, etc.
3) C3, which results from the assembly of multiple C2s so as to create a finished appliance capable of independently performing the functions for which it was created.

a) identification of at least one printed circuit board and of the components of that board;
b) identification of the materials constituting said components,
c) attachment of a unique identification code to said printed circuit board,
d) selective disassembly of the components based on the selected materials.

A subsequent material recovery step may then be envisaged.

Step d) carried out on the basis of the data provided by the system described above. In fact, if the data on the specific apparatus are not already present in the platform / system, an inspection/optical analysis will be carried out which, thanks to artificial intelligence and machine-learning applications, will be able to provide sufficient and necessary data to proceed with the selective disassembly.

According to a possible embodiment of the method of the present invention, a step of prioritizing the materials to be processed may be provided.

The priority may be calculated on the basis of step b), assessing the concentrations of the various materials and the relative environmental risk value or factor.

Further features of the system and method object of the present invention will be described hereinafter through the illustration of some embodiments and relate to improvements of what was previously described.

These features are in fact related to the disassembly, selection and recovery of individual materials, which can take place simply and in an automated manner and concern aspects related to the physical recovery of materials: disassembly and selection of the various components according to the specific contents thereof, subsequent refining and production of secondary raw materials to be placed on the market.

It will be clear that the system and method object of the present invention are related to a recovery of resources to be sought, selected and valued and not to a simple recycling, as is already the case for simpler to treat and more widespread materials such as iron, glass, paper or the like.

The integrated use of the information is also significant, both obtained directly from the participating manufacturers, and in other cases where the manufacturers do not participate and/or the equipment in question was produced before the entry into operation of the present invention, the necessary data will be acquired independently, stored and managed on the platform by the owner.

In the long term, in addition to improving the conditions for the recovery and reuse of materials contained in electronic equipment, there will be a "circular " and therefore more rational and sustainable use of natural reserves.

It will thereby be possible to envisage a strengthening of the market for secondary raw materials, which on the one hand will allow the creation of a new supply source from "urban mines", and on the other hand will accelerate the moment when it will be possible to have an electronic device made with a significant number of recycled materials, and therefore more sustainable.

In fact, as will be specified hereinafter, the system particularly comprises selective disassembly means of the various components of the printed circuit boards, configured so that the disassembly is carried out in a very specific and determined manner based on the processed data of the system, so as to allow to detach and collect the different parts based on the actual content of the materials constituting them.

To achieve this objective, the system must be aware of both the chemical elements to be collected and where they are precisely placed on the printed circuit boards.

These and other features and advantages of the present invention will become clearer from the following description of some non-limiting exemplary embodiments illustrated in the attached drawings in which:

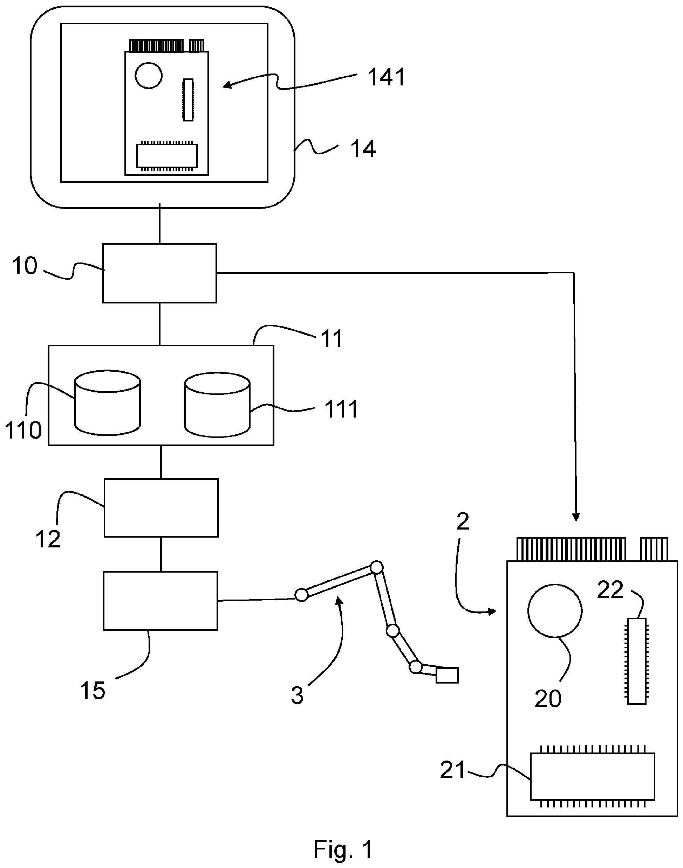

figure 1 shows a concept diagram of a possible embodiment of the recovery system object of the present invention.

It is specified that the figures annexed to the present patent application indicate an embodiment of the method and system object of the present invention to better understand the specific advantages and features thereof.

This embodiment is therefore to be understood for the purpose of non-limiting explanation of the inventive concept of the present invention, namely to provide a method and a system which allow to obtain an effective and efficient selection of the materials used for the creation of electrical and electronic equipment and a possible and subsequent recovery which operates on the basis of the data provided by the system.

With particular reference to figure 1, the system object of the present invention is adapted to the selection of materials on the basis of the data made available on the platform. Data which, as mentioned above, are either provided by manufacturers or acquired directly on the same disassembly line specially equipped with a visual analysis system. In this example, this is information about the materials constituting the electrical and electronic equipment, in particular the selection of materials constituting the components 20, 21, 22 of a printed circuit board 2.

For the sake of simplicity of presentation, only one printed circuit board is illustrated, but it will be clear how the data made available by the system object of the present invention can be used for a plurality of boards, as well as for any further electronic equipment in whole or in one or more of the parts thereof.

The system of figure 1 comprises a storage unit 11, a processing unit 12, an input unit 10 and an output unit 15.

The input unit 10 comprises a user interface aimed at acquiring and/or entering data and/or features related to the printed circuit board 2 within the processing unit 11.

The user interface may for example consist of a keyboard or any other state-of-the-art data input device, such as a camera for capturing board images.

Once the data has been entered into the storage unit 11, the processing unit 12 is configured to generate a unique identification code to be associated with the printed circuit board 2.

The storage unit 11 further comprises a first database 110 containing information about the type of components present within the printed circuit board 2, a second database 111 containing information about the materials constituting the components 20, 21 and 22, as well as associative tables adapted to associate the unique identification code generated by the processing unit 12 with the first 110 and/or the second 111 database.

The first database 110 may further comprise information about the positioning of the components within the single printed circuit board 2 so as to provide the system with a spatial identification of the components.

The compilation of the first database 110 preferably takes place thanks to the data relating to the printed circuit board 2 previously acquired by the manufacturer through the input unit 10 or inserted in the pre-selection step directly on the disassembly line.

Alternatively or in combination, the use of an artificial intelligence system may be provided for the compilation of the database 110 consisting of the information automatically acquired by the optical analysis system.

A scan of the printed circuit board 2 is performed, which processes the image through an automatic classification system such as an artificial neural network adapted to recognize the type of components and compile the database 110.

The scanning of the printed circuit board 2 also makes it possible to create a virtual model 141 of the printed circuit board 2, which can for example be acquired directly by the system or, if required, be displayed on a display 14. In normal operation, the process is automated and the information acquired during the process particularly relates to the identification of the various components and the position thereof.

This information is directly integrated with that available on which and how many individual materials are present therein.

In this case, the input unit 10 may have imaging means adapted to scan the board 2.

The generation of the virtual model 141 will be useful for the selective detachment of the individual components based on the quality and quantity of the various chemical elements actually contained in each individual, different component present on the board, as will be described below.

The database 111 integrates and uses the information inside the database 110 to find the type of components 20, 21 and 22 and generate a "list of materials" constituting the printed circuit board 2, as well as to identify or locate the correct position of each component on the board.

For example, the user may insert the components of the board 2 using the name or a code thereof.

It follows that, thanks to the processing unit, through the unique identification code it will be possible to trace all the materials constituting the board associated with the identification code.

According to a possible embodiment, the system may provide for printing such an identification code, for example in the form of a bar code or QR code, so that the purchaser of the board may trace all the information necessary for the disposal, selection and reuse of the materials.

As an alternative to what has just been described, according to a preferred embodiment, it can be envisaged to use the codes and/or other systems which are already used and affixed to the boards (C2) or finished devices (C3) directly by the manufacturer.

The system object of the present invention also allows to obtain a reuse of those particular printed circuit boards of greater value which may have a future utility / market. Which types, and what value to attribute to them will be evaluated from time to time.

In fact, a "history" of the printed circuit boards is created, and through the identification code, it will be possible to trace the function and origin thereof, so that these boards could be reused, for example for particular industrial plants.

As anticipated, the identification code may also be provided by the manufacturer of the printed circuit board and provided to the system.

It is specified that each unique identification code will be stored within the storage unit 11.

It is clear that the user entering the data relating to the printed circuit board may be the designer/ manufacturer of the printed circuit board 2 and/or possibly the electronic waste treatment plant which performs the recognition through optical analysis.

The advantage of a centralized platform capable of collecting and processing information from all the plants which adhere to the system covered by the present patent application is underlined here, so that, working simultaneously, several plants have a much greater overall acquisition capacity than individual plants not connected in the same functional network.

Once the databases 110 and 111 have been compiled, the unique code of the individual board is associated with the list of materials and components constituting the printed circuit board 2.

The output unit 15 acquires the unique identification code of the printed circuit board 2, compares it with the unique codes present within the storage unit 11, finds the type of printed circuit board 2 and the materials constituting it.

The output unit 15 is therefore configured to acquire the unique identification code and to generate instructions aimed at recovering the materials present in the components 20, 21 and 22 of the printed circuit board 2.

These instructions can be of any type.

For example, the output unit 15 may produce / print a report of the materials present and the location thereof within the electronic equipment or parts thereof, together with method steps adapted to instruct a user to manually remove the components and materials.

Similarly, the output unit 15 may generate an explanatory video viewable through the display 14, to teach a user how to recover the materials.

As anticipated, the system, via the input unit 10, processing unit 12, or output unit 15, may generate a virtual model 141 of the printed circuit board 2.

This virtual model may be used to instruct a system or user to disassemble (manually or mechanically) the components 20, 21 and 22 and to select materials.

According to the improvement of the system illustrated in figure 1, the system also comprises disassembly means 3 for disassembling the components of the printed circuit boards.

Advantageously, the means 3 consist of automated disassembly means, which receive command signals generated by the output unit 15.

Such means 3 may consist, for example, of a pick-and-place used inversely, or of a robotic arm having a terminal head with the tools necessary for disassembly.

The robotic arm must be set to reach the components 20, 21 and 22 and act in the interface area between the component and the printed circuit board 2.

It follows that the arm 3 must know the assembly diagram of the printed circuit board 2.

The assembly diagram may be known a priori in order to set the arm 3 to perform precise instructions for disassembly.

Alternatively, the arm 3 shall "learn" and/or receive information to recognize, select and disassemble the individual components 20, 21 and 22 before collecting them in homogeneous fractions.

The digital /virtual model 141 represents the guide of the arm 3, as it generates a fixed reference system indicating to the arm 3, or any other disassembly system, the correct position of each component 20, 21 and 22.

Finally, it is specified that regardless of the arm 3 settings, three solutions can be envisaged for the detachment of the components 20, 21 and 22,
the first that the printed circuit board 2 is maintained at a suitable temperature to soften the weld, so much so that it can be mechanically detached, the second provides that with a very short advance notice of the action of the gripping and traction system of the arm 3, an extremely punctual heat source acts on the single component and is limited to the welds of the single component, of the laser or microplasma type.

The third solution is that the board is selectively heated on the components to be detached, by means of a specially designed stencil, and that the components are then disconnected by a vibration or other mechanical stress.

Alternatively or in combination with the rise in temperature, chemical treatment may be envisaged to dissolve the welds of the components 20, 21 and 22.

While the invention is susceptible to various modifications and alternative constructions, some preferred embodiments have been shown in the drawings and described in detail.

It should be understood, however, that there is no intention of limiting the invention to the specific illustrated embodiment but, on the contrary, it aims to cover all the modifications, alternative constructions, and equivalents falling within the scope of the invention as defined in the claims.

The use of "for example", "etc.", "or" refers to non-exclusive non-limiting alternatives, unless otherwise stated.

The use of "includes" means "includes but not limited to", unless otherwise stated.

## Claims

1. A selection system of the materials constituting electrical and electronic equipment based on the individual and specific data of the materials contained therein, comprising a storage unit (11), a processing unit (12), an input unit (10) and an output unit (15),
said input unit (10) comprises a user interface for entering data of at least one printed circuit board (2) belonging to at least one electronic device within said storage unit (10),
said processing unit (12) being configured to manage a unique identification code to be associated with each individual printed circuit board (2),
said storage unit (10) comprising at least a first database (110) containing information about the type of components present within said one or more printed circuit boards (2), **characterized in that** said storage unit (10) comprises at least a second database (111) containing information about the types of materials within each type of component constituting said boards (20, 21, 22), as well as associative tables adapted to associate the unique identification code with said databases (110, 111),
said processing unit (12) being further configured to generate the second database using known information on the quality and quantity of the materials constituting each type of component,
said output unit (15) being configured to acquire said unique identification code and to generate instructions aimed at the specific recovery of the materials present in the various components (20, 21, 22).

2. The system of claim 1, wherein said first database (110) contains information about the location of the components within said printed circuit board (2).

3. The system according to claim 1 or claim 2, wherein said output unit (15) is configured to generate a virtual model (141) of the one or more printed circuit boards (2) stored within the storage unit (11).

4. A system according to any of the preceding claims,
wherein disassembly means (3) are provided for the disassembly of said printed circuit boards (2).

5. The system of claim 4, wherein said disassembly means (3) include detaching and selecting the various components based on information relating to the content of the various chemical elements contained and therefore suitable for recovery.

6. A system according to claim 4, wherein said disassembly means comprise devices configured to make the components of the printed circuit board free and easily detachable.

7. The system according to any of the preceding claims,
wherein said disassembly means (3) consist of automated means,
said output unit (15) being configured to generate command signals to be sent to said automated means (3).

8. A method for selecting the materials constituting electrical and electronic equipment with the system according to any of claims from 1 to 7,
**characterized in that** it comprises the following steps:
a) identification of at least one printed circuit board and of the components of that board and generation of a first database (100) comprising information relating to the types of components inside the printed circuit board;
b) identification of the materials constituting said components and generation of a second database (111) containing information about the materials constituting said components,
c) attachment of a unique identification code to said printed circuit board,
d) selective disassembly of the components of said printed circuit board based on the identified materials.

9. The method according to claim 8, wherein step a) involves the generation of a virtual model of said printed circuit board.

10. The method according to claim 8 or claim 9, wherein step d) comprises a specific step for freeing the individual components from the weld constraint.

11. The method according to any of claims 8 to 10, wherein step d) comprises a step of chemical-physical treatment of the components of said printed circuit board.

12. The method according to any of claims 8 to 10, wherein step d) is carried out automatically.

## Patentansprüche

1. System zur Sortierung von Materialien, aus denen elektrische und elektronische Geräte bestehen, auf der Grundlage der individuellen und spezifischen Daten der darin enthaltenen Materialien, mit einer Speichereinheit (11), einer Verarbeitungseinheit (12), einer Eingabeeinheit (10) und einer Ausgabeeinheit (15),
wobei die Eingabeeinheit (10) eine Benutzerschnittstelle zur Eingabe von Daten mindestens einer Leiterplatte (2) umfasst, die zu mindestens einem elektronischen Gerät innerhalb der Speichereinheit (10) gehört,
wobei die Verarbeitungseinheit (12) so konfiguriert ist, dass sie einen eindeutigen Identifikationscode verwaltet, der jeder einzelnen Leiterplatte (2) zugeordnet wird,
wobei die Speichereinheit (10) mindestens eine erste Datenbank (110), die Informationen über die Art der in der einen oder den mehreren Leiterplatten (2) vorhandenen Komponenten enthält, **dadurch gekennzeichnet, dass** die Speichereinheit mindestens eine zweite Datenbank (111) umfasst, die Informationen über die Arten von Materialien in jeder Art von Komponente enthält, aus denen die Leiterplatten (20, 21, 22) bestehen, sowie Assoziationstabellen, die dazu ausgelegt sind, den eindeutigen Identifikationscode den genannten Datenbanken (110, 111) zu verknüpfen, wobei die Verarbeitungseinheit (12) ferner so konfiguriert ist, dass sie die zweite Datenbank unter Verwendung bekannter Informationen über die Qualität und Quantität der Materialien, aus denen jeder Komponententyp besteht, erzeugt,
wobei die Ausgabeeinheit (15) so konfiguriert ist, dass sie den eindeutigen Identifikationscode erfasst und Anweisungen erzeugt, die auf die spezifische Rückgewinnung der in den verschiedenen Komponenten (20, 21, 22) vorhandenen Materialien abzielen.

2. System nach Anspruch 1, wobei die erste Datenbank (110) Informationen über die Lage der Komponenten innerhalb der Leiterplatte (2) enthält.

3. System nach Anspruch 1 oder Anspruch 2, wobei die Ausgabeeinheit (15) so konfiguriert ist, dass sie ein virtuelles Modell (141) der einen oder mehreren in der Speichereinheit (11) gespeicherten Leiterplatten (2) erzeugt.

4. System nach einem der vorstehenden Ansprüche, wobei Zerlegungsmittel (3) zum Zerlegen der Leiterplatten (2) vorgesehen sind.

5. System nach Anspruch 4, wobei die Zerlegungsmittel (3) das Ablösen und Auswählen der verschiedenen Komponenten auf der Grundlage von Informationen über den Gehalt der verschiedenen enthaltenen chemischen Elemente umfassen, die daher für die Rückgewinnung geeignet sind.

6. System nach Anspruch 4, wobei die Zerlegungsmittel Vorrichtungen umfasst, die so konfiguriert sind, dass sie die Komponenten der Leiterplatte freilegen und leicht abnehmbar machen.

7. System nach einem der vorstehenden Ansprüche, wobei die Zerlegungsmittel (3) aus automatisierten Mitteln bestehen,
wobei die Ausgabeeinheit (15) so konfiguriert ist, dass sie Befehlssignale erzeugt, die an die automatisierten Mittel (3) gesendet werden.

8. Verfahren zur Auswahl der Materialien, aus denen elektrische und elektronische Geräte bestehen, mit dem System gemäß einem der Ansprüche 1 bis 7,
**dadurch gekennzeichnet, dass** es die folgenden Schritte umfasst:
a) Identifizierung mindestens einer Leiterplatte und der Komponenten dieser Leiterplatte sowie Erstellung einer ersten Datenbank (100), die Informationen über die Arten der Komponenten innerhalb der Leiterplatte enthält;
b) Identifizierung der Materialien, aus denen die genannten Bauteile bestehen, und Erstellung einer zweiten Datenbank (111), die Informationen über die Materialien enthält, aus denen die genannten Bauteile bestehen,
c) Anbringen eines eindeutigen Identifikationscodes an der genannten Leiterplatte,
d) selektive Demontage der Bauteile der genannten Leiterplatte auf der Grundlage der identifizierten Materialien.

9. Verfahren nach Anspruch 8, wobei Schritt a) die Erstellung eines virtuellen Modells der genannten Leiterplatte umfasst.

10. Verfahren nach Anspruch 8 oder Anspruch 9, wobei Schritt d) einen spezifischen Schritt zum Lösen der einzelnen Komponenten aus der Lötverbindung umfasst.

11. Verfahren nach einem der Ansprüche 8 bis 10, wobei Schritt d) einen Schritt der chemisch-physikalischen Bearbeitung der Komponenten der genannten Leiterplatte umfasst.

12. Verfahren nach einem der Ansprüche 8 bis 10, wobei Schritt d) automatisch durchgeführt wird.

## Revendications

1. Système de sélection des matériaux constituant des équipements électriques et électroniques, basé sur les données individuelles et spécifiques des matériaux qu'ils contiennent, comprenant une unité de mémoire (11), une unité de traitement (12), une unité d'entrée (10) et une unité de sortie (15),
ladite unité d'entrée (10) comprenant une interface utilisateur permettant de saisir des données relatives à au moins une carte de circuit imprimé (2) appartenant à au moins un dispositif électronique au sein de ladite unité de mémoire (10),
ladite unité de traitement (12) étant configurée pour gérer un code d'identification unique à associer à chaque carte de circuit imprimé (2) individuelle,
ladite unité de mémoire (10) comprenant au moins une première base de données (110) contenant des informations sur le type de composants présents au sein de ladite ou desdites cartes de circuits imprimés (2), **caractérisé en ce que** ladite unité de stockage comprend au moins une deuxième base de données (111) contenant des informations sur les types de matériaux au sein de chaque type de composant constituant lesdites cartes (20, 21, 22), ainsi que des tables d'association adaptées pour associer le code d'identification unique auxdites bases de données (110, 111), ladite unité de traitement (12) étant en outre configurée pour générer la deuxième base de données à l'aide d'informations connues sur la qualité et la quantité des matériaux constituant chaque type de composant,
ladite unité de sortie (15) étant configurée pour acquérir ledit code d'identification unique et pour générer des instructions visant la récupération spécifique des matériaux présents dans les différents composants (20, 21, 22).

2. Système selon la revendication 1, dans lequel ladite première base de données (110) contient des informations sur l'emplacement des composants au sein de ladite carte de circuit imprimé (2).

3. Système selon la revendication 1 ou la revendication 2, dans lequel ladite unité de sortie (15) est configurée pour générer un modèle virtuel (141) de la ou des cartes de circuit imprimé (2) stockées au sein de l'unité de stockage (11).

4. Système selon l'une quelconque des revendications précédentes, dans lequel des moyens de démontage (3) sont prévus pour le démontage desdites cartes de circuits imprimés (2).

5. Système selon la revendication 4, dans lequel lesdits moyens de démontage (3) comprennent le détachement et la sélection des différents composants sur la base d'informations relatives au contenu des différents éléments chimiques contenus et donc aptes à être récupérés.

6. Système selon la revendication 4, dans lequel lesdits moyens de démontage comprennent des dispositifs configurés pour rendre les composants de la carte de circuit imprimé libres et facilement détachables.

7. Système selon l'une quelconque des revendications précédentes, dans lequel lesdits moyens de démontage (3) consistent en des moyens automatisés,
ladite unité de sortie (15) étant configurée pour générer des signaux de commande destinés à être envoyés auxdits moyens automatisés (3).

8. Procédé de sélection des matériaux constituant des équipements électriques et électroniques à l'aide du système selon l'une quelconque des revendications 1 à 7,
**caractérisé en ce qu'**il comprend les étapes suivantes :
a) identification d'au moins une carte de circuit imprimé et des composants de cette carte, et génération d'une première base de données (100) comprenant des informations relatives aux types de composants présents à l'intérieur de la carte de circuit imprimé ;
b) l'identification des matériaux constituant lesdits composants et la génération d'une deuxième base de données (111) contenant des informations sur les matériaux constituant lesdits composants,
c) l'attribution d'un code d'identification unique à ladite carte de circuit imprimé,
d) le démontage sélectif des composants de ladite carte de circuit imprimé sur la base des matériaux identifiés.

9. Procédé selon la revendication 8, dans lequel l'étape a) implique la génération d'un modèle virtuel de ladite carte de circuit imprimé.

10. Procédé selon la revendication 8 ou la revendication 9, dans lequel l'étape d) comprend une étape spécifique visant à libérer les composants individuels de la contrainte de soudure.

11. Procédé selon l'une quelconque des revendications 8 à 10, dans lequel l'étape d) comprend une étape de traitement physico-chimique des composants de ladite carte de circuit imprimé.

12. Procédé selon l'une quelconque des revendications 8 à 10, dans lequel l'étape d) est effectuée automatiquement.
